# EUROPEAN PATENT APPLICATION

(11) **EP 3 608 158 A1**
(43) Date of publication of application: **12.02.2020**
(21) Application number: 19189571.3
(22) Date of filing: 01.08.2019
(51) Int. Cl.: B60L 53/67, B60L 53/10, B60L 53/30, B60L 53/60, B60L 53/62, H02J 7/00

(54) **A MULTI-PLUG DC CHARGING PILE SYSTEM AND DISTRIBUTION METHOD OF ITS CHARGING POWER**

(30) Priority: 10.08.2018 CN 201810907563
(71) Applicant: Beijing X-Charge Co., Ltd., Beijing 100015 (CN)
(72) Inventor: DING, Rui, Beijing, Beijing 100015 (CN); LOU, Tengfei, Beijing, Beijing 100015 (CN); REN, Haifu, Beijing, Beijing 100015 (CN); NIU, Hongjun, Beijing, Beijing 100015 (CN); SONG, Hongbin, Beijing, Beijing 100015 (CN); ZHAN, Yongli, Beijing, Beijing 100015 (CN); LI, Jianfeng, Beijing, Beijing 100015 (CN); SUN, Jianyu, Beijing, Beijing 100015 (CN)
(74) Representative: Monzón de la Flor, Luis Miguel

(57) **Abstract**

The invention discloses a multi-plug DC charging pile system, the number of whose charging modules can reach more than 6, while the number of plugs is only half of the number of charging modules. Each charging module can be switched to any plug. At the same time, the economy, practicability and stability of the product are improved. The multi-plug DC charging pile system includes: six DC charging modules, three plugs, a main control board, a switching control board and sixteen DC contactors. The main control board controls the output of six DC charging modules through CAN. The main control board is connected with the switching control board. The main control board is connected with three plugs through CAN. The sixteen DC contactors are connected with one of three plugs respectively. The switching control board controls the on-off of sixteen DC contactors to control the DC charging power obtained by three plugs. The present invention also provides a charging power distribution method of this multi-plug DC charging pile system.

## Description

### TECHNICAL FIELD

The present invention relates to the technical field of new energy vehicles and power electronics, and particularly to a multi-plug DC charging pile system and distribution method of its charging power.

### BACKGROUND OF THE INVENTION

With the progress of technology and the development of science and technology, as well as the increasingly serious environmental pollution, the energy-saving and environmental protection of new energy vehicles are more and more accepted by the public. More and more attention has been paid to the charging problem of electric vehicles. Many charging piles have been built in many parts of China to charge electric vehicles, which has played a very good role in the promotion of electric vehicles.

The DC charging pile used for charging electric vehicles is commonly known as "fast charging". Current DC charging piles in the industry are divided into integrated DC charging piles and split DC charging piles. Due to the volume limitation, the single charging pile is equipped with up to four plugs at present. Because the charging output part is designed separately from the DC power unit, the number of plugs per DC power unit of the split charging pile can be increased to 6 plugs, 8 plugs, even 12 plugs, etc.

During the design of DC power unit of multi-plug charging pile, in order to make the most efficient use of charging module in the limited charging process, in many application cases, each charging module need be switched to any plug to meet the actual vehicle demand. At the same time, protection characteristics, device use, and so on should be considered, in order to enhance the product economy, the practicability, the stability.

### CONTENTS OF THE INVENTION

The technical problem addressed by the present invention is to overcome the deficiency in the prior art, and to provide a multi-plug DC charging pile system, the number of whose charging modules can reach more than 6, while the number of plugs is only half of the number of charging modules. Each charging module can be switched to any plug. At the same time, the economy, practicability and stability of the product are improved.

The technical solution of the present invention is that the multi-plug DC charging pile system includes:
six DC charging modules, three plugs, a main control board, a switching control board and sixteen DC contactors. The main control board controls the output of six DC charging modules through CAN. The main control board is connected with the switching control board. The main control board is connected with three plugs through CAN. The sixteen DC contactors are connected with one of three plugs respectively. The switching control board controls the on-off of sixteen DC contactors to control the DC charging power obtained by three plugs.

In the present invention, the main control board controls the output of six DC charging modules through CAN. The main control board is connected with the switching control board. The main control board is connected with three plugs through CAN. The sixteen DC contactors are connected with one of three plugs respectively. The switch control board connects several of the sixteen DC contactors according to the expected DC charging power ratio of the three plugs, so that when the number of plugs is only half of the number of the charge modules, each charge module can be switched to any plug. At the same time, the economy, practicability and stability of the product are improved.

The present invention also provides a charging power distribution method of this multi-plug DC charging pile system. The main control board controls the output of six DC charging modules through CAN. The main control board is connected with the switching control board. The main control board is connected with three plugs through CAN. The sixteen DC contactors are connected with one of the three plugs respectively. The switch control board connects several of the sixteen DC contactors according to the expected DC charging power ratio of the three plugs.

### DESCRIPTION OF THE DRAWINGS

Fig.1 is a circuit diagram of a preferred embodiment of a multi-plug DC charging pile system according to the present invention.
Fig.2 is a block diagram of a multi-plug DC charging pile system according to the present invention.
Fig.3 is a schematic diagram of multiple groups required for a multi-plug DC charging pile system according to the present invention.

### DESCRIPTION OF THE PREFERRED EMBODIMENTS

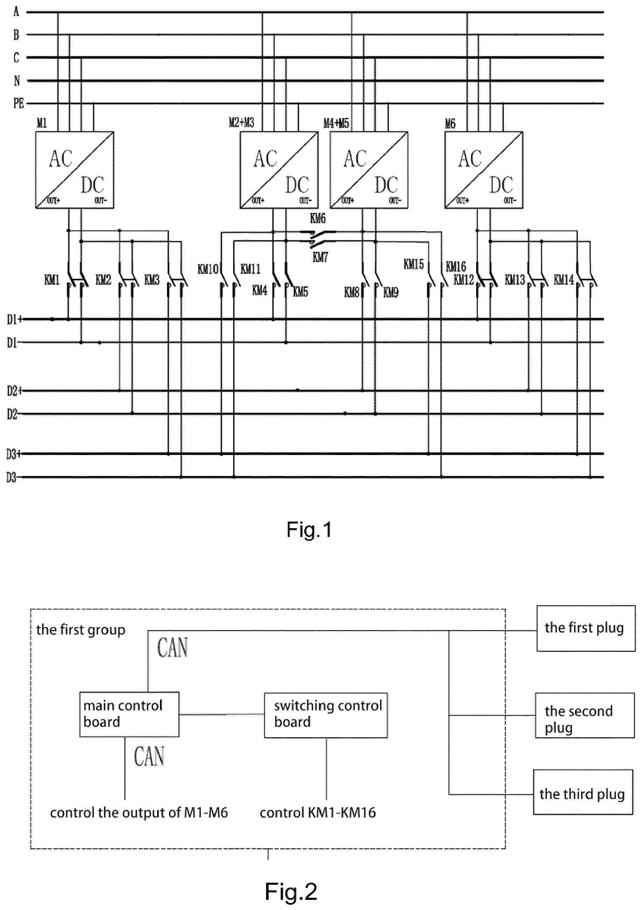

As shown as Fig. 1, 2, the multi-plug DC charging pile system includes:
six DC charging modules, three plugs, a main control board, a switching control board and sixteen DC contactors. The main control board controls the output of six DC charging modules through CAN. The main control board is connected with the switching control board. The main control board is connected with three plugs through CAN. The sixteen DC contactors are connected with one of three plugs respectively. The switching control board controls the on-off of sixteen DC contactors to control the DC charging power obtained by three plugs. In Figure 1, A/B/C is a three-phase 380VAC, 50Hz input power, N-line is zero, PE is grand.

In the present invention, the main control board controls the output of six DC charging modules through CAN. The main control board is connected with the switching control board. The main control board is connected with three plugs through CAN. The sixteen DC contactors are connected with one of three plugs respectively. The switch control board connects several of the sixteen DC contactors according to the expected DC charging power ratio of the three plugs, so that when the number of plugs is only half of the number of the charge modules, each charge module can be switched to any plug. At the same time, the economy, practicability and stability of the product are improved.

Preferably, the first DC charging module M1 is the first group, the second and third DC charging modules M2, M3 are the second group, the fourth and fifth DC charging modules M4, M5 are the third group, and the sixth DC charging module M6 is the fourth group. The first group is connected to the first plug D1 by the first DC contactor KM1. The first group is connected to the second plug D2 by the second DC contactor KM2. The first group is connected to the third plug D3 by the third DC contactor KM3. The fourth group is connected to the first plug D1 by the twelfth DC contactor KM12. The fourth group is connected to the second plug D2 by the thirteenth DC contactor KM13. The fourth group is connected to the third plug D3 by the fourteenth DC contactor KM14. The second group is connected to the first plug D1 by the fourth and fifth DC contactors KM4, KM5. The second group is connected to the second plug D2 by the sixth, seventh, eighth and ninth DC contactors KM6, KM7, KM8, KM9. The second group is connected to the third plug D3 by the tenth and eleventh DC contactors KM10, KM11. The third group is connected to the first plug D1 by the fourth, fifth, sixth, seventh DC contactors KM4, KM5, KM6, KM7. The third group is connected to the second plug D2 by the eighth, ninth DC contactors KM8, KM9. The third group is connected to the third plug D3 by the fifteenth and sixteenth DC contactors KM15, KM16.

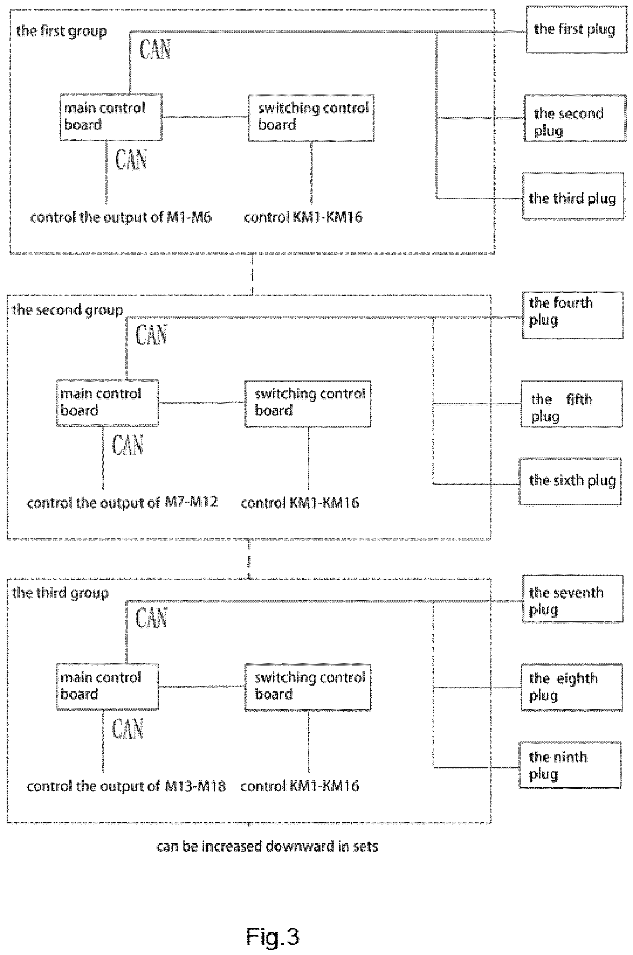

Preferably, as shown as Fig.3, when 3N plugs are needed, wherein n is a positive integer, the multi-plug DC charging pile system acts as a group and replicates n groups.

Preferably, the output power of each DC charging module is equal.

The present invention also provides a charging power distribution method of this multi-plug DC charging pile system. The main control board controls the output of six DC charging modules through CAN. The main control board is connected with the switching control board. The main control board is connected with three plugs through CAN. The sixteen DC contactors are connected with one of the three plugs respectively. The switch control board connects several of the sixteen DC contactors according to the expected DC charging power ratio of the three plugs.

Preferably, as shown as Table 1, when the output power ratio of the first, second and third plugs is 0:0:6, the third, tenth, eleventh, fourteenth, fifteenth and sixteenth DC contactors are connected. When the output power ratio of the first, second and third plugs is 0:1:5, the second, tenth, eleventh, fourteenth, fifteenth and sixteenth DC contactors are connected. When the output power ratio of the first, second and third plugs is 0:2:4, the third, eighth, ninth, eleventh, fourteenth DC contactors are connected. When the output power ratio of the first, second and third plugs is 0:3:3, the third, eighth, ninth, tenth, eleventh, thirteenth DC contactors are connected. When the output power ratio of the first, second and third plugs is 0:4:2, the second, eighth, ninth, tenth, eleventh, thirteenth DC contactors are connected. When the output power ratio of the first, second and third plugs is 0:5:1, the second, sixth, seventh, eighth, ninth, fourteenth DC contactors are connected. When the output power ratio of the first, second and third plugs is 0:6:0, the second, sixth, seventh, eighth, ninth, tenth DC contactors are connected. When the output power ratio of the first, second and third plugs is 1:0:5, the first, sixth, seventh, fourteenth, fifteenth, sixteenth DC contactors are connected. When the output power ratio of the first, second and third plugs is 1:1:4, the first, sixth, seventh, thirteenth, fifteenth, sixteenth DC contactors are connected. When the output power ratio of the first, second and third plugs is 1:2:3, the first, eighth, ninth, tenth, eleventh, fourteenth DC contactors are connected. When the output power ratio of the first, second and third plugs is 1:3:2, the first, eighth, ninth, tenth, eleventh, fourteenth DC contactors are connected. When the output power ratio of the first, second and third plugs is 1:4:1, the first, sixth, seventh, eighth, ninth, fourteenth DC contactors are connected. When the output power ratio of the first, second and third plugs is 1:5:0, the first, sixth, seventh, eighth, ninth, thirteenth DC contactors are connected. When the output power ratio of the first, second and third plugs is 2:0:4, the first, sixth, seventh, twelfth, fifteenth, sixteenth DC contactors are connected. When the output power ratio of the first, second and third plugs is 2:1:3, the second, fourth, fifth, fourteenth, fifteenth, sixteenth DC contactors are connected. When the output power ratio of the first, second and third plugs is 2:2:2, the second, fourth, fifth, thirteenth, fifteenth, sixteenth DC contactors are connected. When the output power ratio of the first, second and third plugs is 2:3:1, the second, fourth, fifth, eighth, ninth, fourteenth DC contactors are connected. When the output power ratio of the first, second and third plugs is 2:4:0, the second, fourth, fifth, eighth, ninth, thirteenth DC contactors are connected. When the output power ratio of the first, second and third plugs is 3:0:3, the first, fourth, fifth, fourteenth, fifteenth, sixteenth DC contactors are connected. When the output power ratio of the first, second and third plugs is 3:1:2, the first, fourth, fifth, thirteenth, fifteenth, sixteenth DC contactors are connected. When the output power ratio of the first, second and third plugs is 3:2:1, the first, fourth, fifth, eighth, ninth, fourteenth DC contactors are connected. When the output power ratio of the first, second and third plugs is 3:3:0, the first, fourth, fifth, eighth, ninth, thirteenth DC contactors are connected. When the output power ratio of the first, second and third plugs is 4:0:2, the third, fourth, fifth, sixth, seventh, fourteenth DC contactors are connected. When the output power ratio of the first, second and third plugs is 4:1:1, the second, fourth, fifth, sixth, seventh, fourteenth DC contactors are connected. When the output power ratio of the first, second and third plugs is 4:2:0, the second, fourth, fifth, sixth, seventh, thirteenth DC contactors are connected. When the output power ratio of the first, second and third plugs is 5:0:1, the first, fourth, fifth, sixth, seventh, fourteenth DC contactors are connected. When the output power ratio of the first, second and third plugs is 5:1:0, the first, fourth, fifth, sixth, seventh, thirteenth DC contactors are connected. When the output power ratio of the first, second and third plugs is 6:0:0, the first, fourth, fifth, sixth, seventh, twelfth DC contactors are connected.

As an example that each charging module is 30KW, the DC contactor control distribution scheme is illustrated according to the switching scheme in Fig. 1.

**Table 1**

| Types of Power Distribution | Power of Plug 1/ kW | Power of Plug 2/ kW | Power of Plug 3/ kW | Total Power /kW | Number corresponding to conductive contactor KM |
|---|---|---|---|---|---|
| 1 | 0 | 0 | 180 | 180 | 3, 10, 11, 15, 16, 14 |
| 2 | 0 | 30 | 150 | 180 | 2, 10, 11, 15, 16, 14 |
| 3 | 0 | 60 | 120 | 180 | 3, 8, 9, 10, 11, 14 |
| 4 | 0 | 90 | 90 | 180 | 3, 10, 11, 8, 9, 13 |
| 5 | 0 | 120 | 60 | 180 | 2, 8, 9, 13, 10, 11 |
| 6 | 0 | 150 | 30 | 180 | 2, 6, 7, 8, 9, 14 |
| 7 | 0 | 180 | 0 | 180 | 2, 6, 7, 8, 9, 13 |
| 8 | 30 | 0 | 150 | 180 | 1, 6, 7, 15, 16, 14 |
| 9 | 30 | 30 | 120 | 180 | 1, 13, 6, 7, 15, 16 |
| 10 | 30 | 60 | 90 | 180 | 1, 8, 9, 10, 11, 14 |
| 11 | 30 | 90 | 60 | 180 | 1, 8, 9, 13, 10, 11 |
| 12 | 30 | 120 | 30 | 180 | 1, 6, 7, 8, 9, 14 |
| 13 | 30 | 150 | 0 | 180 | 1, 6, 7, 8, 9, 13 |
| 14 | 60 | 0 | 120 | 180 | 1, 12, 6, 7, 15, 16 |
| 15 | 60 | 30 | 90 | 180 | 4, 5, 2, 15, 16, 14 |
| 16 | 60 | 60 | 60 | 180 | 4, 5, 2, 13, 15, 16 |
| 17 | 60 | 90 | 30 | 180 | 4, 5, 8, 9, 2, 14 |
| 18 | 60 | 120 | 0 | 180 | 4, 5, 8, 9, 2, 13 |
| 19 | 90 | 0 | 90 | 180 | 1, 4, 5, 15, 16, 14 |
| 20 | 90 | 30 | 60 | 180 | 1, 4, 5, 13, 15, 16 |
| 21 | 90 | 60 | 30 | 180 | 1, 4, 5, 8, 9, 14 |
| 22 | 90 | 90 | 0 | 180 | 1, 4, 5, 8, 9, 13 |
| 23 | 120 | 0 | 60 | 180 | 4, 5, 6, 7, 3, 14 |
| 24 | 120 | 30 | 30 | 180 | 4, 5, 6, 7, 2, 14 |
| 25 | 120 | 60 | 0 | 180 | 4, 5, 6, 7, 2, 13 |
| 26 | 150 | 0 | 30 | 180 | 1, 4, 5, 6, 7, 14 |
| 27 | 150 | 30 | 0 | 180 | 1, 4, 5, 6, 7, 13 |
| 28 | 180 | 0 | 0 | 180 | 1, 4, 5, 6, 7, 12 |

The beneficial effects of the present invention are as follows:
(1) When the number of plugs is more than or equal to 4, the output of each plug can meet the minimum individual mobilization of modules.
(2) Simple structure, economy and small size of temporary cabinet.
(3) When the number of plugs is n and n is a multiple of 3, it can be easily duplicated and expanded.

The above contents are only the preferable embodiments of the present invention, and do not limit the present invention in any manner. Any improvements, amendments and alternative changes made to the above embodiments according to the technical spirit of the present invention shall fall within the claimed scope of the present invention.

## Claims

1. A multi-plug DC charging pile system, **characterized in that**, the system includes:
six DC charging modules, three plugs, a main control board, a switching control board and sixteen DC contactors. The main control board controls the output of six DC charging modules through CAN. The main control board is connected with the switching control board. The main control board is connected with three plugs through CAN. The sixteen DC contactors are connected with one of three plugs respectively. The switching control board controls the on-off of sixteen DC contactors to control the DC charging power obtained by three plugs.

2. The multi-plug DC charging pile system according to the claim 1, **characterized in that**, the first DC charging module (M1) is the first group, the second and third DC charging modules (M2, M3) are the second group, the fourth and fifth DC charging modules (M4, M5) are the third group, and the sixth DC charging module (M6) is the fourth group. The first group is connected to the first plug (D1) by the first DC contactor (KM1). The first group is connected to the second plug (D2) by the second DC contactor (KM2). The first group is connected to the third plug (D3) by the third DC contactor (KM3). The fourth group is connected to the first plug (D1) by the twelfth DC contactor (KM12). The fourth group is connected to the second plug (D2) by the thirteenth DC contactor (KM13). The fourth group is connected to the third plug (D3) by the fourteenth DC contactor (KM14). The second group is connected to the first plug (D1) by the fourth and fifth DC contactors (KM4, KM5). The second group is connected to the second plug (D2) by the sixth, seventh, eighth and ninth DC contactors (KM6, KM7, KM8, KM9). The second group is connected to the third plug (D3) by the tenth and eleventh DC contactors (KM10, KM11). The third group is connected to the first plug (D1) by the fourth, fifth, sixth, seventh DC contactors (KM4, KM5, KM6, KM7). The third group is connected to the second plug (D2) by the eighth, ninth DC contactors (KM8, KM9). The third group is connected to the third plug (D3) by the fifteenth and sixteenth DC contactors (KM15, KM16).

3. The multi-plug DC charging pile system according to the claim 2, **characterized in that**, when 3n plugs are needed, wherein n is a positive integer, the multi-plug DC charging pile system acts as a group and replicates n groups.

4. The multi-plug DC charging pile system according to any claim of claim 1-3, **characterized in that**, the output power of each DC charging module is equal.

5. The distribution method of charging power of the multi-plug DC charging pile system according to claim 4, **characterized in that**, the main control board controls the output of six DC charging modules through CAN. The main control board is connected with the switching control board. The main control board is connected with three plugs through CAN. The sixteen DC contactors are connected with one of the three plugs respectively. The switch control board connects several of the sixteen DC contactors according to the expected DC charging power ratio of the three plugs.

6. The distribution method of charging power of the multi-plug DC charging pile system according to claim 5, **characterized in that**, when the output power ratio of the first, second and third plugs is 0:0:6, the third, tenth, eleventh, fourteenth, fifteenth and sixteenth DC contactors are connected. When the output power ratio of the first, second and third plugs is 0:1:5, the second, tenth, eleventh, fourteenth, fifteenth and sixteenth DC contactors are connected. When the output power ratio of the first, second and third plugs is 0:2:4, the third, eighth, ninth, eleventh, fourteenth DC contactors are connected. When the output power ratio of the first, second and third plugs is 0:3:3, the third, eighth, ninth, tenth, eleventh, thirteenth DC contactors are connected. When the output power ratio of the first, second and third plugs is 0:4:2, the second, eighth, ninth, tenth, eleventh, thirteenth DC contactors are connected. When the output power ratio of the first, second and third plugs is 0:5:1, the second, sixth, seventh, eighth, ninth, fourteenth DC contactors are connected. When the output power ratio of the first, second and third plugs is 0:6:0, the second, sixth, seventh, eighth, ninth, tenth DC contactors are connected. When the output power ratio of the first, second and third plugs is 1:0:5, the first, sixth, seventh, fourteenth, fifteenth, sixteenth DC contactors are connected. When the output power ratio of the first, second and third plugs is 1:1:4, the first, sixth, seventh, thirteenth, fifteenth, sixteenth DC contactors are connected. When the output power ratio of the first, second and third plugs is 1:2:3, the first, eighth, ninth, tenth, eleventh, fourteenth DC contactors are connected. When the output power ratio of the first, second and third plugs is 1:3:2, the first, eighth, ninth, tenth, eleventh, fourteenth DC contactors are connected. When the output power ratio of the first, second and third plugs is 1:4:1, the first, sixth, seventh, eighth, ninth, fourteenth DC contactors are connected. When the output power ratio of the first, second and third plugs is 1:5:0, the first, sixth, seventh, eighth, ninth, thirteenth DC contactors are connected. When the output power ratio of the first, second and third plugs is 2:0:4, the first, sixth, seventh, twelfth, fifteenth, sixteenth DC contactors are connected. When the output power ratio of the first, second and third plugs is 2:1:3, the second, fourth, fifth, fourteenth, fifteenth, sixteenth DC contactors are connected. When the output power ratio of the first, second and third plugs is 2:2:2, the second, fourth, fifth, thirteenth, fifteenth, sixteenth DC contactors are connected. When the output power ratio of the first, second and third plugs is 2:3:1, the second, fourth, fifth, eighth, ninth, fourteenth DC contactors are connected. When the output power ratio of the first, second and third plugs is 2:4:0, the second, fourth, fifth, eighth, ninth, thirteenth DC contactors are connected. When the output power ratio of the first, second and third plugs is 3:0:3, the first, fourth, fifth, fourteenth, fifteenth, sixteenth DC contactors are connected. When the output power ratio of the first, second and third plugs is 3:1:2, the first, fourth, fifth, thirteenth, fifteenth, sixteenth DC contactors are connected. When the output power ratio of the first, second and third plugs is 3:2:1, the first, fourth, fifth, eighth, ninth, fourteenth DC contactors are connected. When the output power ratio of the first, second and third plugs is 3:3:0, the first, fourth, fifth, eighth, ninth, thirteenth DC contactors are connected. When the output power ratio of the first, second and third plugs is 4:0:2, the third, fourth, fifth, sixth, seventh, fourteenth DC contactors are connected. When the output power ratio of the first, second and third plugs is 4:1:1, the second, fourth, fifth, sixth, seventh, fourteenth DC contactors are connected. When the output power ratio of the first, second and third plugs is 4:2:0, the second, fourth, fifth, sixth, seventh, thirteenth DC contactors are connected. When the output power ratio of the first, second and third plugs is 5:0:1, the first, fourth, fifth, sixth, seventh, fourteenth DC contactors are connected. When the output power ratio of the first, second and third plugs is 5:1:0, the first, fourth, fifth, sixth, seventh, thirteenth DC contactors are connected. When the output power ratio of the first, second and third plugs is 6:0:0, the first, fourth, fifth, sixth, seventh, twelfth DC contactors are connected.
